# EUROPÄISCHE PATENTSCHRIFT

(11) **EP 1 527 697 B1**
(45) Veröffentlichungstag und Bekanntmachung des Hinweises auf die Patenterteilung: **09.01.2008**
(21) Anmeldenummer: 04016173.9
(22) Anmeldetag: 09.07.2004
(51) Int. Cl.: A23G 3/02, A23G 9/00, A23G 9/32, A23G 9/28, A23L 1/187, A23L 1/00, A23P 1/12

(54) **Dessert im Becher**
Dessert in a cup
dessert dans un gobelet

(30) Priorität: 31.10.2003 DE 10350976
(43) Veröffentlichungstag der Anmeldung: 04.05.2005
(73) Patentinhaber: Dr. AUGUST OETKER NAHRUNGSMITTEL KG, 33617 Bielefeld (DE)
(72) Erfinder: Holt, Johannes, 31600 Uchte (DE); Urban, Thomas, 33604 Bielefeld (DE)
(74) Vertreter: Meyer, Gerd

(56) Entgegenhaltungen:
- EP-A- 0 615 692
- EP-A- 0 781 510
- EP-A- 0 811 324
- US-A- 2 313 060
- US-A- 2 576 842
- US-A- 2 722 177
- US-A- 2 969 285

## Beschreibung

Die Erfindung betrifft ein Verfahren und eine Vorrichtung sowie danach hergestellte Desserts, die gezielt angeordnete und in der Grundcreme sichtbare Flecken aufweisen.

Die bisher im Markt befindlichen Produkte sind einphasig oder mehrphasig, wobei sie horizontal oder vertikal im Becher geschichtet sind. Eine vertikale durchgehende, spiralförmige Dosierung bzw. Schichtung ist ebenfalls bekannt.

Die Druckschrift US 2,722,177 A offenbart eine Vorrichtung für Eiscreme und ähnliche Produkte. Diese Vorrichtung sieht ein Hauptrohr für den Produktstrom 1 (Grund- bzw. Eiscreme) vor, in das eine oder mehrere Zugangsrohre für einen Produktstrom 2 mit Kontrast-Nahrungsmittel (z.B. Schokoladensirup) integriert sind. Dabei ist oberhalb der Einspritzrohre ein - alle Zugangsrohre umfassendes - Schneidmesser angeordnet, das den Produktstrom 2 unterbricht mit der Folge, dass in die Grundcreme ein unregelmäßiges Muster "hineingeschossen" wird. Dabei wird das Kontrast-Nahrungsmittel zu einem Festkörper kristallisiert, der sich nicht mehr mit dem Produktsrom 1 vermischt.

Aus der Druckschrift US 2,313,060 A ist ein Verfahren und eine Vorrichtung für Eiscreme und ähnliche Produkte bekannt, die der vorgenannten US-Druckschrift ähnlich sind. Das im Hauptrohr bzw. im Produktstrom 1 angeordnete Einspritzrohr weist einen oder mehrere Ausgänge auf, wobei der Produktsrom 2 mittels eines Ventils unterbrochen wird. Auch hier werden in den fortlaufenden Produktstrom 1 einzelne "Schüsse" abgegeben, so dass ein unregelmäßiges Muster entsteht. Auch hier findet auf Grund der Kristallbildungen keine Vermischung des Produktstroms 1 mit dem Produktstrom 2 statt.

Nachteilig ist dieser Stand der Technik zum einen deshalb, weil das Kontrast-Nahrungsmittel nicht gezielt in der Grundcreme angeordnet werden kann, sondern im fortlaufenden Produktstrom 1 ein unregelmäßiges Muster abbildet. Zum anderen besteht hier die Gefahr einer Fadenbildung, d.h. das Kontrast-Nahrungsmittel wird im Produktstrom 1 ungewollt in die Länge gezogen bzw. - je nach Viskositäten - mit dem Produktstrom 1 stark vermischt, was einen unschönen Gesamteindruck in der Grundcreme entstehen lässt.

Die Aufgabe der vorliegenden Erfindung besteht darin, ein Dessert zu schaffen, das auf Grund seiner attraktiven Optik verbunden mit optimaler Geschmackskombination Neugierde und Kaufanreize weckt.

Durch die erfindungsgemäße neuartige Dosiertechnik wird den Bedürfnissen des Endverbrauchers stärker Rechnung getragen. Man kann optische und geschmackliche Reize durch entsprechende mehrphasige Produktkombinationen optimal gestalten, wobei natürlich physikalische Gegebenheiten und Voraussetzungen bei der Gestaltung der Rezepturen für die einzelnen Produktphasen zu berücksichtigen sind. Dieses sind insbesondere das Fließverhalten der einzelnen Phasen sowie das Diffusionsverhalten der einzelnen Inhaltsstoffe. Beliebte Produktkombinationen sind z.B. Schokoladenpudding mit Vanillecreme oder Vanillepudding mit Schokoladencreme oder mit einer fruchtigen Produktphase.

Die Erfindung ermöglicht eine gezielte Anordnung des Kontrast-Nahrungsmittels in Fleckenform, d.h. es kann eine vorherbestimmte Verteilung der Flecken vorgenommen werden.

Das erfindungsgemäße Dessert weist sichtbare Flecken bzw. Einlagen in Form mindestens eines anderen Nahrungsmittels als der Grundcreme auf. Sinnvollerweise sollten diese anderen Lebensmittel andersfarbig sein, wobei ein geschmacklicher Unterschied neben dem Sehgenuß auch den Eßgenuß steigert. Die durch die unterschiedlichen Lebensmittel entstandenen Flecken können jedwede geometrische Form aufweisen. Vorzugsweise wird angestrebt, daß die Flecken kreisförmig sind, wobei allerdings auch unregelmäßige Fleckenformen möglich sind. Vorzugsweise muß darauf geachtet werden, daß die Produktphasen gleiche Viskositäten aufweisen. Es ist aber auch möglich, mit Produktphasen unterschiedlicher Viskosität das gewünschte Ergebnis zu erzielen. Die Viskositäten der einzelnen Produktphasen sollten bei der Dosierung vorzugsweise zwischen 5.000 bis 80.000 cps liegen (Bestimmung mit Brookfield DV-I, Temp. 20°C, Spindel 4, U/Min. 5). Die Trockenmasse der einzelnen Produktphasen sollte über 14 Gew.-% liegen. Es hat sich des weiteren herausgestellt, daß der vorteilhafte pH-Wert der einzelnen Produktphasen zwischen 3,0 bis 7,2 anzusiedeln ist. Als Dosiertemperatur wird vorgeschlagen, die Abfüllung bei Temperaturen zwischen 10 bis 35 °C vorzunehmen.

Die Herstellung des erfindungsgemäßen Desserts geschieht durch Einschaltung eines Mehrstoffdoseurs, welcher mindestens zwei Auslaufdüsen aufweist, wobei mindestens ein Produktstrom getaktet dosiert wird. Die Abfüllung des erfindungsgemäßen Desserts kann auf zwei Arten geschehen.

Bei der ersten Art werden die Behältnisse vor dem Befüllen so angehoben, daß die Fülldüsen nahe am Becherboden sind und mit dem steigenden Füllspiegel abgesenkt und während des Absenkens in den getakteten Dosierpausen um unterschiedliche vorherbestimmte Gradzahlen gedreht werden, damit eine sichtbare Fleckenverteilung erreicht wird.

Bei der zweiten Abfüllart wird vorgeschlagen, daß statt des Bechers das Dosierorgan mit mindestens zwei Fülldüsen in das zu befüllende Behältnis abgesenkt, während der Befüllung angehoben und während der getakteten Befüllung in den Taktpausen um unterschiedliche vorherbestimmte Gradzahlen gedreht wird.

## Patentansprüche

1. Verfahren zur Herstellung von mehrphasigen Desserts mit einem Mehrstoffdoseur mit mindestens zwei Auslaufdüsen, wobei mindestens ein Produktstrom getaktet dosiert wird, **dadurch gekennzeichnet, dass** die Dessertbecher vor dem Befüllen so angehoben werden, dass die Auslaufdüsen nahe am Becherboden sind, und mit steigendem Füllspiegel abgesenkt und während des Absenkens in den getakteten Dosierpausen um unterschiedliche vorherbestimmte Gradzahlen gedreht werden, so dass sichtbare Flecken in Form mindestens eines anderen Nahrungsmittels als der Grundcreme entstehen.

2. Verfahren zur Herstellung von mehrphasigen Desserts mit einem Mehrstoffdoseur mit mindestens zwei Auslaufdüsen, wobei mindestens ein Produktstrom getaktet dosiert wird, **dadurch gekennzeichnet, dass** die Auslaufdüsen vor dem Befüllen so abgesenkt werden, dass sie nahe am Becherboden sind, und mit steigendem Füllspiegel angehoben und während des Anhebens in den getakteten Dosierpausen um unterschiedliche vorherbestimmte Gradzahlen gedreht werden, so dass sichtbare Flecken in Form mindestens eines anderen Nahrungsmittels als der Grundcreme entstehen.

3. Verfahren zur Herstellung von Desserts nach einem der Ansprüche 1 bis 2, **dadurch gekennzeichnet, dass** die Viskositäten der Produktphasen während des Dosierens zwischen 5.000 bis 80.000 cps liegen.

4. Verfahren zur Herstellung von Desserts nach einem der Ansprüche 1 bis 3, **dadurch gekennzeichnet, dass** die Temperaturen der Produktphasen während des Dosierens zwischen 10 bis 35° C liegen.

5. Vorrichtung zur Herstellung von mehrphasigen Desserts mit einem Mehrstoffdoseur mit mindestens zwei Auslaufdüsen und einer Dosiereinrichtung, die den Produktstrom aus mindestens einer Auslaufdüse in Taktabständen unterbricht, **gekennzeichnet durch** eine Hebe-, Senk- und Dreheinrichtung für die Dessertbecher oder für die Auslaufdüsen mit zugeordneter Steuerungsanlage, wobei diese so eingerichtet ist, das Verfahren nach einem der Ansprüche 1 bis 2 durchzuführen.

6. Nach Anspruch 1 oder 2 hergestellte Desserts, **dadurch gekennzeichnet, dass** das Dessert sichtbare Flecken in Form mindestens eines anderen Nahrungsmittels als der Grundcreme aufweist.

7. Desserts nach Anspruch 6, **dadurch gekennzeichnet, dass** das oder die anderen Nahrungsmittel andersfarbig und geschmacklich unterschiedlich zur Grundcreme sind.

8. Desserts nach Ansprüchen 6 und 7, **dadurch gekennzeichnet, dass** die sichtbaren Flecken kreisförmig sind.

9. Desserts nach Ansprüchen 6 und 7, **dadurch gekennzeichnet, dass** die sichtbaren Flecken eine unregelmäßige Form aufweisen.

10. Desserts nach einem der Ansprüche 6 bis 9, **dadurch gekennzeichnet, dass** die Produktphasen des Desserts gleiche Viskositäten haben.

11. Desserts nach einem der Ansprüche 6 bis 9, **dadurch gekennzeichnet, dass** die Produktphasen des Desserts unterschiedliche Viskositäten haben.

12. Desserts nach einem der Ansprüche 6 bis 11, **dadurch gekennzeichnet, dass** die Trockenmasse der Produktphasen über 14 % liegt.

13. Desserts nach einem der Ansprüche 6 bis 12, **dadurch gekennzeichnet, dass** der pH-Wert der einzelnen Produktphasen zwischen 3,0 bis 7,2 liegt.

## Claims

1. Method for production of multi-phase desserts with a multi-component metering device with at least two outlet nozzles, wherein at least one product flow is cyclically metered, **characterised in that** the dessert bowls are so raised prior to filling that the outlet nozzles are near the bowl base and are lowered with increasing filling level and that during the lowering are turned in the cyclic pauses in metering through different predetermined degree amounts so that visible spots in the form of at least one foodstuff other than the base cream substance arise.

2. Method of producing multi-phase desserts with a multi-component metering device with at least two outlet nozzles, wherein at least one product flow is cyclically metered, **characterised in that** the outlet nozzles are so lowered prior to the filling that they are near the bowl base and are raised with increasing filling level and during the raising are rotated in the cyclic metering pauses through different predetermined angle amounts so that visible spots in the form of at least one foodstuff other than the base cream substance arise.

3. Method of producing desserts according to one of claims 1 and 2, **characterised in that** the viscosities of the product phases during the metering lie between 5,000 and 80,000 cps.

4. Method of producing desserts according to one of claims 1 to 3, **characterised in that** the temperatures of the product phases during the metering lie between 10 and 35° C.

5. Device for producing multi-phase desserts with a multi-component metering device with at least two outlet nozzles and metering equipment which interrupts the product flow from at least one outlet nozzle at cyclic intervals, **characterised by** a raising, lowering and rotating device for the dessert bowls or for the outlet nozzles with associated control installation, wherein these is so equipped as to carry out the method according to one of claims 1 and 2.

6. Dessert produced according to claim 1 or 2, **characterised in that** the dessert has visible spots in the form of at least one foodstuff other than the base cream substance.

7. Dessert according to claim 6, **characterised in that** the other foodstuff or foodstuffs has or have a different colour and a different taste with respect to the base cream substance.

8. Dessert according to claims 6 and 7, **characterised in that** the visible spots are circular.

9. Dessert according to claims 6 and 7, **characterised in that** the visible spots have an irregular shape.

10. Dessert according to one of claims 6 to 9, **characterised in that** the product phases of the dessert have the same viscosities:

11. Dessert according to one of claims 6 to 9 , **characterised in that** the product phases of the dessert have different viscosities.

12. Dessert according to one of claims 6 to 11, **characterised in that** the dry mass of the product phases lies above 14%.

13. Dessert according to one of claims 6 to 12, **characterised in that** the pH value of the individual product phases is between 3.0 and 7.2.

## Revendications

1. Procédé pour fabriquer des desserts multiphases à l'aide d'un doseur multiproduit comprenant au moins deux buses distributrices, sachant qu'au moins un produit est dosé de façon cadencée, **caractérisé en ce que** les gobelets à dessert encore vides sont soulevés de telle sorte que les buses distributrices se trouvent à proximité du fond du gobelet, puis sont abaissés au fur et à mesure qu'ils se remplissent et, tandis qu'ils s'abaissent, sont tournés d'un nombre de degrés variable préalablement défini durant les pauses du dosage cadencé, de manière à former des zones différenciées avec au moins un autre aliment que la crème de base.

2. Procédé pour fabriquer des desserts multiphases à l'aide d'un doseur multiproduit comprenant au moins deux buses distributrices, sachant qu'au moins un produit est dosé de façon cadencée, **caractérisé en ce qu'**avant le remplissage, les buses distributrices sont abaissées de telle sorte qu'elles sont situées près du fond du gobelet, puis sont soulevées au fur et à mesure que le gobelet se remplit et, tandis qu'elles s'élèvent, sont tournées d'un nombre de degrés variable préalablement défini durant les pauses du dosage cadencé, de manière à former des zones différenciées avec au moins un autre aliment que la crème de base.

3. Procédé pour fabriquer des desserts selon l'une des revendications 1 et 2, **caractérisé en ce que** les viscosités des phases de produits pendant le dosage sont comprises entre 5 000 et 80 000 cps.

4. Procédé pour fabriquer des desserts selon l'une des revendications 1 à 3, **caractérisé en ce que** les températures des phases de produits pendant le dosage sont comprises entre 10 et 35° C.

5. Dispositif pour fabriquer des desserts multiphases à l'aide d'un doseur multiproduit comprenant au moins deux buses distributrices et un dispositif de dosage qui interrompt le flux de produit s'écoulant d'au moins une buse distributrice à une certaine cadence, **caractérisé par** un dispositif d'élévation, d'abaissement et de rotation pour les gobelets à dessert ou pour les buses distributrices, auquel est associé une commande conçue de manière à pouvoir mettre en oeuvre le procédé selon l'une des revendications 1 et 2.

6. Desserts fabriqués selon la revendication 1 ou 2, **caractérisés en ce que** le dessert présente des zones différenciées formées par au moins un autre aliment que la crème de base.

7. Desserts selon la revendication 6, **caractérisés en ce que** l'autre ou les autres aliments sont différents de la crème de base par leur couleur et leur goût.

8. Desserts selon les revendication 6 et 7, **caractérisés en ce que** les zones différenciées sont circulaires.

9. Desserts selon les revendication 6 et 7, **caractérisés en ce que** les zones différenciées ont une forme irrégulière.

10. Desserts selon l'une des revendications 6 à 9, **caractérisés en ce que** les phases de produits du dessert ont une viscosité identique.

11. Desserts selon l'une des revendications 6 à 9, **caractérisés en ce que** les phases de produits du dessert présentent des viscosités différentes.

12. Desserts selon l'une des revendications 6 à 11, **caractérisés en ce que** le taux de matière sèche des phases de produits est supérieur à 14%.

13. Desserts selon l'une des revendications 6 à 12, **caractérisés en ce que** le pH des différentes phases de produits est compris entre 3,0 et 7,2.
